# EUROPÄISCHE PATENTANMELDUNG

(11) **EP 2 031 552 A1**
(43) Veröffentlichungstag der Anmeldung: **04.03.2009**
(21) Anmeldenummer: 07450151.1
(22) Anmeldetag: 03.09.2007
(51) Int. Cl.: G06Q 20/00, G07F 7/10

(54) **Zahlungstransaktionsterminal und Zahlungstransaktionssystem**

(71) Anmelder: PayLife Bank GmbH, 1030 Wien (AT)
(72) Erfinder: Langschwert, Jürgen, 3001 Mauerbach (AT); Gehringer, Peter Mag, 2000 Stockerau (AT)
(74) Vertreter: Margotti, Herwig Franz

(57) **Zusammenfassung**

Ein Zahlungstransaktionsterminal (1) umfasst eine Dateneingabeeinrichtung (2) zur Eingabe von Codes, Verkaufsdaten, etc., eine Kartenleseeinrichtung (3) zum Lesen von Daten von Datenspeicherkarten, zumindest eine Datenkommunikationsschnittstelle (8) zur Verbindung mit einem entfernten Serverrechner (14) über eine Datenleitung (13), Rechenmittel (7) zur Steuerung des Zahlungstransaktionsterminals und Stromversorgungsmittel (12) zur Versorgung des Zahlungstransaktionsterminals mit elektrischer Energie. Das Zahlungstransaktionsterminal (1) besitzt Manipulationsdetektionsmittel (20), die Betriebsparameter (BP) des Zahlungstransaktionsterminals (1) erfassen und an den Serverrechner (14) melden oder Abweichungen der erfassten Betriebsparameter (BP) vom regulären Betrieb des Zahlungstransaktionsterminals (1) detektieren und an den Serverrechner (14) melden.

## Beschreibung

Die Erfindung betrifft ein Zahlungstransaktionsterminal, umfassend eine Dateneingabeeinrichtung zur Eingabe von Codes, Verkaufsdaten, etc., eine Kartenleseeinrichtung zum Lesen von Daten von Datenspeicherkarten, zumindest eine Datenkommunikationsschnittstelle zur Verbindung mit einem entfernten Serverrechner über eine Datenleitung, Rechenmittel zur Steuerung des Zahlungstransaktionsterminals und Stromversorgungsmittel zur Versorgung des Zahlungstransaktionsterminals mit elektrischer Energie, gemäß dem Oberbegriff des Anspruchs 1.

Die Erfindung betrifft weiters ein Zahlungstransaktionssystem, umfassend Zahlungstransaktionsterminals und zumindest einen Serverrechner, der mit den Zahlungstransaktionsterminals über eine Datenleitung verbunden ist.

Zahlungstransaktionsterminals, auf die sich die vorliegende Erfindung bezieht, umfassen so genannte Point-of-Sales (POS) Terminals, weiters Geldausgabeautomaten, aber auch Automaten zur Ausgabe und Eingabe von Coupons, Wertmarken, Tickets etc..

Allgemein gesprochen dienen Zahlungstransaktionsterminals dazu, Bezahlvorgänge bargeldlos abzuwickeln und Auszahlungsvorgänge automationsgestützt abzuwickeln, wobei der Auszahlungsvorgang Bargeldausgaben, aber auch die Ausgabe von Coupons, Wertmarken, Tickets etc. umfasst. Ein Kennzeichen dieser Zahlungstransaktionsterminals ist, dass der Benutzer seine Berechtigung zur Durchführung der Transaktion nachweist, indem er eine so genannte "Karte" mit einem darin befindlichen Speicher, auf dem die für den Berechtigungsnachweis notwendigen Daten gespeichert sind, mit dem Zahlungstransaktionsterminal in Kontakt bringt. Das In-Kontakt-Bringen kann sowohl durch physische Kontaktierung als auch berührungslos erfolgen, das Zahlungstransaktionsterminal verfügt dazu über ein Kartenlesegerät, das gegebenenfalls auch in der Lage ist, Schreibvorgänge in den Speicher der Karte durchzuführen. Im einfachsten Fall weist eine solche Karte einen Magnetstreifen auf, auf dem die entsprechenden Informationen gespeichert sind. In einer Weiterentwicklung umfasst eine solche Karte einen Chip mit eingebautem Speicher und gegebenenfalls eigener Rechenintelligenz. Der Begriff "Karte", wie hierin verwendet, ist aber nicht auf Karten mit der üblichen Gestalt von Scheck- und Kreditkarten beschränkt. Vielmehr umfasst er jegliche 2-dimensionale und 3-dimensionale Gestalt und insbesondere auch alle elektronischen Geräte mit eingebauten Datenspeichern, die Zahlungstransaktionen ermöglichen, wie Mobiltelefone mit eingebauten Datenspeichern, so genannte Smart-Phones, etc.

Zahlungstransaktionsterminals und Zahlungstransaktionssysteme sind aus dem modernen Wirtschaftsleben nicht mehr wegzudenken und ersetzen mittlerweile zu einem beträchtlichen Prozentsatz den Bargeldverkehr. Allerdings üben diese Zahlungstransaktionsterminals auch auf Kriminelle eine große Anziehungskraft aus, die immer wieder und auf vielerlei Weise versuchen, diese Geräte zu manipulieren, um dadurch Betrügereien vornehmen zu können. Moderne Zahlungstransaktionsterminals und Zahlungstransaktionssystems besitzen bereits eine Vielzahl von Sicherheitsmerkmalen, die solche Manipulationen erschweren, sowie Überwachungseinrichtungen, mit deren Hilfe Manipulationsversuche erkannt werden und das angegriffene Zahlungstransaktionsterminal deaktiviert und/oder Alarm geschlagen wird. Es sind auch so genannte "stille Alarme" möglich, bei denen zwar Alarmsignale an Serverrechner und/oder Sicherheitszentralen gesendet werden, das Zahlungstransaktionsterminal aber scheinbar normal weiterarbeitet, ohne dass der abgegebene Alarm am Terminal für eine manipulierende Person feststellbar ist.

Allerdings ist die Ausstattung von Zahlungstransaktionsterminals und Zahlungstransaktionssystemen mit neuen Sicherheits- und Überwachungsfunktionen ein ständiger Wettlauf gegen die zunehmenden technischen Fähigkeiten von Kriminellen und die fortschreitenden Vernetzung von internationalen Betrügerbanden, so dass die Neu- und Weiterentwicklungen von Sicherheits- und Überwachungsfunktionen an Zahlungstransaktionsterminals und Zahlungstransaktionssystemen von höchster Wichtigkeit ist, um auch zukünftig hochverlässliche Zahlungstransaktionen durchführen zu können und somit die Volkswirtschaft gegen Schaden durch Betrügereien zu schützen und die hohe Akzeptanz des bargeldlosen Zahlungsverkehrs auch für die Zukunft zu erhalten.

Der vorliegenden Erfindung liegt die Aufgabe zugrunde, die Sicherheit von Zahlungstransaktionsterminals und Zahlungstransaktionssystemen zu erhöhen. Diese Aufgabe wird durch die Bereitstellung eines Zahlungstransaktionsterminals mit den kennzeichnenden Merkmalen des Anspruchs 1 sowie durch Bereitstellen eines Zahlungstransaktionssystems mit den kennzeichnenden Merkmalen des Anspruchs 14 gelöst. Weitere vorteilhafte Ausgestaltungen der Erfindung gehen aus den abhängigen Ansprüchen und der nachfolgenden Beschreibung hervor.

Das erfindungsgemäße Zahlungstransaktionsterminal umfasst eine Dateneingabeeinrichtung zur Eingabe von Codes, Verkaufsdaten, etc., eine Kartenleseeinrichtung zum Lesen von Daten von Datenspeicherkarten, zumindest eine Datenkommunikationsschnittstelle zur Verbindung mit einem entfernten Serverrechner über eine Datenleitung, Rechenmittel zur Steuerung des Zahlungstransaktionsterminals und Stromversorgungsmittel zur Versorgung des Zahlungstransaktionsterminals mit elektrischer Energie. Der Begriff "Datenleitung", wie hierin verwendet, ist funktionell zu verstehen, nicht aber auf eine bestimmte physische Ausprägung beschränkt. Insbesondere umfasst er sowohl drahtgebundene als auch drahtlose Datenübertragung. Das Zahlungstransaktionsterminal zeichnet sich durch Manipulationsdetektionsmittel aus, die Betriebsparameter des Zahlungstransaktionsterminals erfassen und an den Serverrechner melden oder Abweichungen der erfassten Betriebsparameter vom regulären Betrieb des Zahlungstransaktionsterminals detektieren und an den Serverrechner melden. Diese Meldung kann versteckt im Hintergrund oder am Gerät sichtbar durchgeführt werden. Auf diese Weise können versuchte Manipulationen erkannt und an eine zentrale Stelle, nämlich den Serverrechner weitergeleitet werden, wo entsprechende Schutzmaßnahmen eingeleitet bzw. Analysen der erhaltenen Daten durchgeführt werden können. Zusätzlich kann das Zahlungstransaktionsterminal bei Erkennen außergewöhnlicher Betriebszustände sich selbst deaktivieren und/oder eine Warnmeldung in seine Anzeige schreiben, die nur von einer autorisierten Person (z.B. durch Eingabe eines bestimmten Codes) oder einer Servicestelle rückgängig gemacht werden kann.

In einer Ausführungsform des erfindungsgemäßen Zahlungstransaktionsterminals umfassen die Manipulationsdetektionsmittel einen Temperatursensor, beispielsweise einen Infrarotsensor. Dieser Temperatursensor misst als Betriebsparameter die Temperatur bzw. die Wärmestrahlung an dem Zahlungstransaktionsterminal. Sollte ein Krimineller versuchen, das Gehäuse des Zahlungstransaktionsterminals mit Lötkolben, Lötlampen oder Schweißgeräten zu öffnen oder zusätzliche Bauteile am Gerät anzulöten, so erkennt der Temperatursensor die dadurch hervorgerufene, außerhalb der normalen Betriebsbedingungen liegende Temperaturerhöhung.

In weiterer Ausgestaltung des erfindungsgemäßen Zahlungstransaktionsterminals umfassen die Manipulationsdetektionsmittel zumindest einen Entnahmedetektor zur Erfassung der Entnahme von zumindest einem Teil des Zahlungstransaktionsterminals, wie einer Platine und/oder der Kartenleseeinrichtung und/oder der Dateneingabeeinrichtung. Der zu erfassende Betriebsparameter ist dabei das Vorhandensein des überwachten Teils. In einer ersten Ausführungsform ist der Entnahmedetektor als Schalter ausgebildet, der so im Zahlungstransaktionsterminal angeordnet ist, dass die Entfernung des zu überwachenden Teils das Öffnen oder Schließen eines Kontakts des Schalters auslöst. In einer alternativen Ausführungsform ist der Entnahmedetektor als Lichtschranke ausgebildet, in deren Lichtpfad der zu überwachende Teil angeordnet ist.

In einer bevorzugten Ausführungsform der Erfindung weisen die Manipulationsdetektionsmittel des Zahlungstransaktionsterminals einen Bewegungssensor auf, insbesondere einen Beschleunigungssensor und/oder Neigungssensor. Zahlungstransaktionsterminals sind im operativen Zustand zumeist entweder fix eingebaut oder an einem Schwenkarm befestigt. Sie weisen jedenfalls Lagen auf, die im regulären Betrieb äußerst unwahrscheinlich sind, z.B. auf den Kopf gestellt. Mithilfe des Bewegungssensor können solche unüblichen Bewegungen und Lagen als Betriebsparameter erfasst und gemeldet werden bzw. im Gerät Aktionen ausgelöst werden (Deaktivierung etc.), die eine Weiterbenützung des Zahlungstransaktionsterminals unterbinden. Optional kann dies erst nach einer bestimmten Anzahl des Auftretens solcher Lageveränderungen oder wenn diese Lageveränderungen zu unüblichen Zeiten auftreten (z.B. in der Nacht) erfolgen.

Die Erfindung sieht auch einen Zwischenstecker als Manipulationsdetektionsmittel vor, der an der Datenkommunikationsschnittstelle anordenbar ist und das Entfernen eines Datenleitungskabels vom Zahlungstransaktionsterminal detektiert und diesen Betriebsparameter zunächst intern in einem eigenen Speicher abspeichert. Somit ist das Erkennen der Kabelentfernung auch dann dokumentiert, wenn der Zwischenstecker zusammen mit dem Kabel entfernt wird. Die Funktion des Zwischensteckers, das Entfernen zu erkennen, ist auch unabhängig davon, ob das Zahlungstransaktionsterminal mit elektrischer Spannung versorgt ist oder nicht. Sobald zwischen dem Zwischenstecker und dem Zahlungstransaktionsterminal wieder eine Verbindung besteht, überträgt der Zwischenstecker eine Meldung, die die erkannte Kabelentfernung berichtet, an das Zahlungstransaktionsterminal, das wiederum den Serverrechner informiert. Durch diese Maßnahme wird verhindert, dass Betrüger unerkannt ein Zusatzgerät in die Datenleitung zwischen Zahlungstransaktionsterminal und Serverrechner einschalten, mit dem die Datenübertragung belauscht oder manipuliert werden kann. Man verhindert durch diese Maßnahme auch, dass das Zahlungstransaktionsterminal unerkannt ausgetauscht oder vorübergehend entfernt wird, um z.B. in einem Labor manipuliert zu werden.

Um zu verhindern, dass durch Austauschen des Zwischensteckers eine entdeckte Kabelentfernung nicht an das Zahlungstransaktionsterminal weitergegeben werden kann, ist gemäß der Erfindung auch vorgesehen, dass der Zwischenstecker einen eindeutigen Identifikationscode aufweist, der einem einzigen Zahlungstransaktionsterminal zugeordnet ist, und der Zwischenstecker prüft, ob er tatsächlich an dem zugeordneten Zahlungstransaktionsterminal angesteckt ist.

Weitere Betriebsparameter, die auf mögliche Manipulationen hinweisen sind die Zeitpunkte des Einschaltens und/oder Ausschaltens des Zahlungstransaktionsterminals bzw. die dazwischen liegende Zeitspanne. Zur Messung dieser Betriebsparameter sieht die Erfindung Protokollierungsmittel vor, die die Zeitpunkte des Einschaltens und/oder Ausschaltens des Zahlungstransaktionsterminals erfassen. Beispielsweise ist es verdächtig, wenn in einem Geschäft mit normalen Ladungsöffnungszeiten mitten in der Nacht ein Zahlungstransaktionsterminal eingeschaltet wird, oder wenn, was den Normalfall darstellt, ein üblicherweise ständig in Betrieb befindliches Zahlungstransaktionsterminal abgeschaltet wird. Das Abschalten eines Zahlungstransaktionsterminals kann gemäß der Erfindung erkannt werden, indem die Protokollierungsmittel die Ausschaltzeitpunkte in einem nichtflüchtigen Speicher ablegen, vorzugsweise indem sie in regelmäßigen Zeitabständen einen Zeitstempel in den nichtflüchtigen Speicher schreiben, wobei der jüngste Zeitstempel als Ausschaltzeitpunkt angesehen wird. Unüblich kurze oder lange Zeitspannen, in denen das Zahlungstransaktionsterminal ausgeschaltet ist, werden überwacht, indem die Manipulationsdetektionsmittel die Zeitspanne zwischen dem letzten Ausschaltzeitpunkt und dem aktuellen Einschaltzeitpunkt errechnen und - wenn diese Zeitspanne außerhalb eines definierten Zulässigkeitsbereichs liegt - eine Meldung an den Serverrechner abgeben.

Das Zahlungstransaktionsterminal kann auch in einem Handelkassenmodus betrieben werden, in dem es mit einem Kassensystem verbunden ist, das das Zahlungstransaktionsterminal für Bezahlvorgänge in Bereitschaft versetzt. In einer Ausführungsform der Erfindung sind die Rechenmittel des Zahlungstransaktionsterminals dazu ausgebildet, das Eingeben von Daten an der Dateneingabeeinrichtung, insbesondere das Drücken von Tasten, und/oder das Einstecken von Karten an der Kartenleseeinrichtung zu erfassen, wenn das Zahlungstransaktionsterminal nicht vom Kassensystem in Bereitschaft versetzt wurde und gegebenenfalls eine Meldung an den Serverrechner abzugeben. Dadurch können weitere Manipulationsmöglichkeiten abgefangen werden.

Die erfindungsgemäßen Zahlungstransaktionsterminals sind über Datenleitungen mit zumindest einem Serverrechner verbindbar, wodurch ein Zahlungstransaktionssystem gebildet wird. Der Serverrechner ist mit einer Datenbank verbunden, in die er die von den Zahlungstransaktionsterminals erhaltenen Betriebsparameter-Werte und/oder Meldungen schreibt. Obwohl gewisse Auswertungen der erfassten Betriebsparameter direkt im Zahlungstransaktionsterminal vorgenommen werden können, ist gemäß der Erfindung auch vorgesehen, dass der Serverrechner die in der Datenbank abgelegten Betriebsparameter-Werte nach Abweichungen der erfassten Betriebsparameter von einem definierten Zulässigkeitsbereich durchsucht und bei Erkennen solcher Abweichungen ein Alarmsignal generiert. Der Serverrechner kann sich dabei auf die erfassten Betriebsparameter-Werte mehrerer oder aller Zahlungstransaktionsterminals stützen und Vergleiche anstellen, Tendenzen ermitteln, Durchschnittswerte bilden etc. und somit genaue Analysen erstellen, die zur Manipulationsbekämpfung dienen.

Die Erfindung wird nun anhand eines nicht einschränkenden Ausführungsbeispiels unter Bezugnahme auf die Zeichnungsfigur 1 näher erläutert, die ein schematisches Blockschaltbild eines erfindungsgemäßen Zahlungstransaktionssystems darstellt.

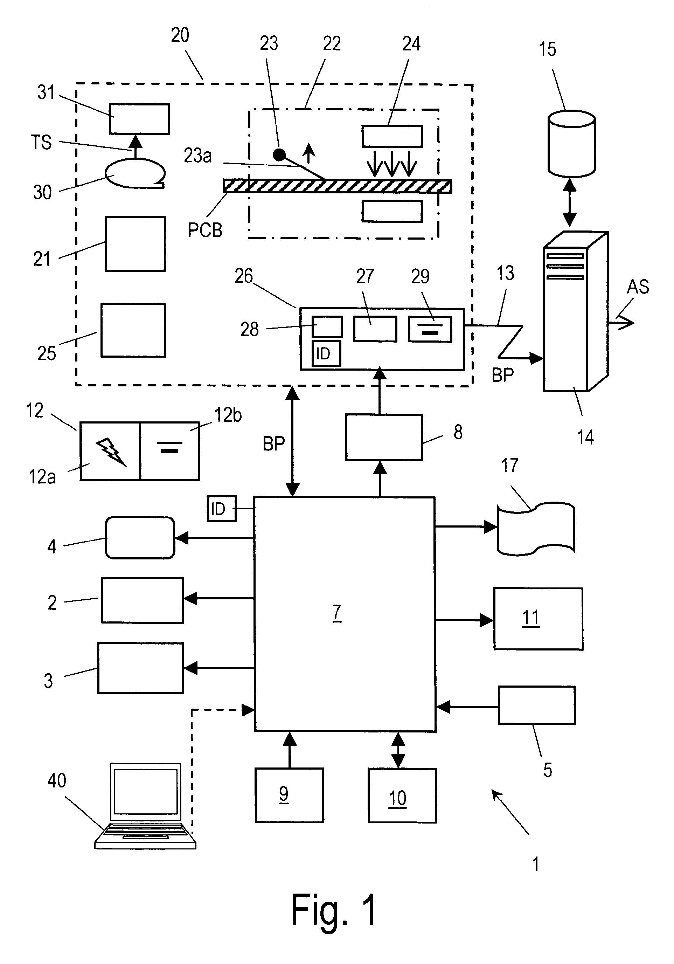

Das in Fig. 1 gezeigte Zahlungstransaktionssystem umfasst ein exemplarisches Zahlungstransaktionsterminal 1 und einen Serverrechner 14, die miteinander über eine Datenleitung 13 bzw. ein Datenkommunikationsnetz verbindbar sind. Es sei erwähnt, dass weder die Zahl der Zahlungstransaktionsterminals 1 noch die der Serverrechner 14 eingeschränkt ist. Das Zahlungstransaktionsterminal 1 ist im Prinzip ein Computer, der spezifisch für seine Aufgabe angepasst ist und über Rechenmittel 7, sowie einen Arbeitsspeicher 10 und einen Programmspeicher 9 verfügt. Die Rechenmittel 7 steuern das Zahlungstransaktionsterminal 1. Eine Dateneingabeeinrichtung 2, die z.B. als numerische Tastatur ausgebildet ist, dient zur Eingabe von Codes, Verkaufsdaten, etc. durch einen Benutzer. Eine Kartenleseeinrichtung 3 dient zum Lesen von Daten von Datenspeicherkarten eines Benutzers des Zahlungstransaktionssystems, wobei die Kartenleseeinrichtung 3 auch als Schreib/Leseeinrichtung ausgebildet sein kann, um Daten in den Speicher der Datenspeicherkarten zu schreiben. Die Kommunikation zwischen den Datenspeicherkarten kann berührungslos (magnetische Abtastung, RFID) oder leitungsgebunden (Chip mit Kontaktflächen) erfolgen. Zumindest eine Datenkommunikationsschnittstelle 8, z.B. eine RJ45 Schnittstelle, die an die Datenleitung 13 angeschlossen ist, sorgt für die Datenkommunikation zwischen dem Zahlungstransaktionsterminal 1 und dem entfernten Serverrechner 14. Ein Display 4 dient als Benutzerschnittstelle zur Anzeige von Informationen während Zahlungstransaktionen sowie zur Anzeige von Warnmeldungen bei Störungen und erkannten Manipulationen. Ein Uhrenchip 5 sorgt dafür, dass im Zahlungstransaktionsterminal 1 stets eine aktuelle Uhrzeit verfügbar ist, wobei der Uhrenchip 5 optional mit einem Zeitserver synchronisierbar ist oder vom Serverrechner 14 gesteuert wird. Wenn das Zahlungstransaktionsterminal 1 als Geldausgabeautomat ausgelegt ist, so ist es mit einer Geldausgabeeinheit 11 versehen. Optional ist ein Drucker 17 vorgesehen, der dazu dient, Quittungen auszugeben, aber je nach Anwendung auch zur Ausgabe von Tickets oder Coupons betrieben werden kann. Stromversorgungsmittel 12 dienen zur Versorgung des Zahlungstransaktionsterminals 1 mit elektrischer Energie, wobei die Stromversorgungsmittel 12 sowohl eine Netzstromversorgung 12a als auch eine Batterie 12b umfassen. Es versteht sich, dass aus Sicherheitsgründen alle beschriebenen Komponenten redundant ausgeführt sein können. Weiters sind die beschriebenen Komponenten in einem nicht dargestellten, gegen unbefugtes Eindringen geschütztes Gehäuse eingebaut. Es sei erwähnt, dass das Zahlungstransaktionsterminal 1 auch nicht dargestellte Datenverschlüsselungsmittel zur gesicherten Datenkommunikation mit dem Serverrechner 14 enthalten kann.

Gemäß der Erfindung weist das Zahlungstransaktionsterminal 1 Manipulationsdetektionsmittel 20 auf, die Betriebsparameter BP des Zahlungstransaktionsterminals 1 erfassen und an den Serverrechner 14 weiterleiten bzw. die Abweichungen der erfassten Betriebsparameter BP vom regulären Betrieb des Zahlungstransaktionsterminals 1 detektieren und diese dem Serverrechner 14 melden. In einer Variante der Erfindung sorgen die Manipulationsdetektionsmittel 20 bei Erkennen einer Manipulation auch für die zumindest teilweise Deaktivierung der Funktionen des Zahlungstransaktionsterminals 1 und verhindern so, dass Betrüger mit ihren Manipulationen erfolgreich sein können. Ebenso können die Manipulationsdetektionsmittel 20 bei Erkennen von Manipulationen eine Warnmeldung in das Display 4 schreiben, die nur nach Eingabe eines bestimmten Codes wieder gelöscht werden kann. Auf diese Weise kann der ordnungsgemäße Betreiber des Zahlungstransaktionsterminals 1 erkennen, dass dieses Zahlungstransaktionsterminal 1 manipuliert wurde und Alarm schlagen bzw. weitere Untersuchungen veranlassen. Somit erleichtert das erfindungsgemäße Zahlungstransaktionsterminal 1 das Erkennen von Manipulationen und kann die Daten der Betriebsparameter BP bzw. deren Abweichungen von normalen Werten oder andere Meldungen an eine zentrale Stelle, nämlich den Serverrechner 14 weiterleiten, wobei an dieser zentralen Stelle automatisiert oder durch geschultes Personal entsprechende Schutzmaßnahmen eingeleitet bzw. Analysen der erhaltenen Daten durchgeführt werden können.

Die Manipulationsdetektionsmittel 20 sind über Datenleitungen, insbesondere einen Datenbus, mit den Rechenmitteln 7 und anderen Komponenten des Zahlungstransaktionsterminals 1 verbunden und umfassen zur Erkennung einer möglichst großen Zahl von unterschiedlichen Manipulationsversuchen diverse Sensoren, die verschiedene Betriebsparameter überwachen. Dazu zählen ein Temperatursensor 21, der beispielsweise als Infrarotsensor ausgeführt ist. Dieser Temperatursensor misst die Temperatur bzw. die Wärmestrahlung an dem Zahlungstransaktionsterminal, genauer gesagt in der Umgebung der Hauptplatine bzw. im Gehäuseinneren. Sollte ein Krimineller versuchen, das Gehäuse des Zahlungstransaktionsterminals mit Lötkolben, Lötlampen oder Schweißgeräten zu öffnen oder - falls er es geschafft hat, das Gehäuse mit anderen Mitteln zu öffnen - zusätzliche Bauteile (Kabel, berührungsempfindliche Tastaturen, etc.) am Gerät anzulöten, so erkennt der Temperatursensor 21 die dadurch hervorgerufene, außerhalb der normalen Betriebsbedingungen liegende Temperaturerhöhung.

Ein weiterer Sensor der Manipulationsdetektionsmittel 20 ist ein Entnahmedetektor 22 zur Erfassung der Entnahme von zumindest einem Teil des Zahlungstransaktionsterminals 1, wie einer Platine PCB und/oder der Kartenleseeinrichtung 3 und/oder der Dateneingabeeinrichtung 2. In einer Ausführungsform ist der Entnahmedetektor 22 als Schalter 23 ausgebildet, der eine Kontaktfeder 23a aufweist, wobei der Schalter 23 so im Zahlungstransaktionsterminal 23 angeordnet ist, dass die Kontaktfeder durch die Platine PCB oder ein anderes der zu überwachenden Teile in eine geöffnete oder geschlossene Stellung vorgespannt ist. Wird nun das überwachte Teil von einem Betrüger entfernt, so schnellt die Kontaktfeder 23a in den anderen Zustand, d.h. geschlossen oder geöffnet, und ermöglicht dadurch das Erkennen der Entnahme des Teils. In einer alternativen Ausführungsform ist der Entnahmedetektor 22 als Lichtschranke 24 ausgebildet, in deren Lichtpfad das zu überwachende Teil (in der Zeichnung die Platine PCB) angeordnet ist. Wird das Teil entfernt, so fällt das ausgestrahlte Licht ungehindert auf den Lichtempfänger, wodurch das Entfernen des Teils erkannt wird.

Die Manipulationsdetektionsmittel 20 umfassen auch einen Bewegungssensor 25, der insbesondere als Beschleunigungssensor und/oder Neigungssensor ausgebildet ist. Der Bewegungssensor 25 erkennt Bewegungen, die das Zahlungstransaktionsterminal 1 ausführt bzw. dessen Winkellage. Da Zahlungstransaktionsterminals im operativen Zustand zumeist entweder fix eingebaut oder an einem Schwenkarm befestigt sind, zumindest aber gewisse Lagen definierbar sind, die im regulären Betrieb äußerst unwahrscheinlich auftreten, wie z.B. das auf den Kopf stellen des Geräts, können mithilfe des Bewegungssensors 25 solche unüblichen Bewegungen und Lagen erfasst und gemeldet werden bzw. als Auslöser für eine Deaktivierung von Funktionen des Zahlungstransaktionsterminals 1 dienen.

Ein weiterer möglicher Angriffspunkt ist die Datenkommunikationsschnittstelle 8 des Zahlungstransaktionsterminals 1 bzw. die daran angeschlossene Datenleitung 13. Bei vielen Manipulationsversuchen stecken Betrüger die Datenleitung 13 vorübergehend ab. Dies lässt sich zwar kaum verhindern, es genügt für die Erkennung von Manipulationen aber auch, wenn das Abstecken erkannt und verlässlich gemeldet wird. Um dies zu erreichen sehen die Manipulationsdetektionsmittel 20 einen Zwischenstecker 26 vor, der zwischen der Datenkommunikationsschnittstelle 8 und der Datenleitung 13 angeordnet wird und das Abstecken der Datenleitung 13 durch Erfassung der elektrischen Änderungen auf den Signalleitungen erkennt. Auch wenn der Zwischenstecker 26 zusammen mit der Datenleitung 13 von der Datenkommunikationsschnittstelle abgenommen wird, ändern sich die elektrischen Signale in der Datenleitung 13, woraus der Zwischenstecker 26 das Abnehmen erkennen kann. Der Zwischenstecker verfügt über einen eigenen Controller 27, einen Datenspeicher 28 und einen Energiespeicher 29, wie z.B. eine Batterie, so dass ein Erkennen des Entfernens der Datenleitung 13 von der Datenkommunikationsschnittstelle 8 zunächst intern in dem Datenspeicher 28 gespeichert wird (z.B. durch Setzen oder Löschen eines Flags). Sobald zwischen dem Zwischenstecker 26 und dem Zahlungstransaktionsterminal 1 wieder eine Verbindung besteht, überträgt der Zwischenstecker 26 eine Meldung, die die erkannte Kabelentfernung berichtet, an das Zahlungstransaktionsterminal 1, das wiederum den Serverrechner 14 informiert.

Um zu verhindern, dass Betrüger den Zwischenstecker 26 einfach austauschen, ist vorgesehen, dass der Zwischenstecker 26 einen eindeutigen Identifikationscode ID aufweist, der einem einzigen Zahlungstransaktionsterminal 1 zugeordnet ist, in dem ebenfalls der Identifikationscode ID abgelegt ist. Der Zwischenstecker 26 prüft bei jeder Kommunikation mit dem Zahlungstransaktionsterminal 1, ob er tatsächlich an dem ihm zugeordneten Zahlungstransaktionsterminal 1 angesteckt ist.

Auch aus den Zeitpunkten des Einschaltens und/oder Ausschaltens des Zahlungstransaktionsterminals 1 bzw. der dazwischen liegenden Zeitspanne kann wertvolle Information über eventuelle Manipulationsversuche gewonnen werden. Zur Erfassung dieser Betriebsparameter umfassen die Manipulationsdetektionsmittel 20 Protokollierungsmittel 30, die die Zeitpunkte des Einschaltens und/oder Ausschaltens des Zahlungstransaktionsterminals 1 erfassen. Das Abschalten des Zahlungstransaktionsterminals 1 kann erkannt werden, indem die Protokollierungsmittel 30 die Ausschaltzeitpunkte in einem nichtflüchtigen Speicher 31 ablegen, vorzugsweise indem sie in regelmäßigen Zeitabständen einen vom Uhrenchip 5 erhaltenen Zeitstempel TS in den nichtflüchtigen Speicher 31 schreiben. Der jüngste im Speicher 31 gespeicherte Zeitstempel TS kann als Ausschaltzeitpunkt des Geräts angesehen werden. Aus diesem Zeitstempel TS und dem Zeitpunkt des nächsten Einschaltens des Zahlungstransaktionsterminals 1, der durch Auslesen eines aktuellen Zeitstempels des Uhrenchips 5 erhalten wird, können die Manipulationsdetektionsmittel 20 die Zeitspanne zwischen dem letzten Ausschaltzeitpunkt und dem aktuellen Einschaltzeitpunkt errechnen und - wenn diese Zeitspanne außerhalb eines definierten Zulässigkeitsbereichs liegt - eine Meldung an den Serverrechner 14 veranlassen.

Es sei erwähnt, dass verschiedene Teile der Manipulationsdetektionsmittel 20 als ausführbare Computerprogramme ausgebildet sein können, die in den Rechenmitteln 7 abgearbeitet werden.

Das Zahlungstransaktionsterminal 1 kann zur Implementierung eines so genannten Handelskassenmodus optional mit einem Kassensystem 40 verbunden sein, das das Zahlungstransaktionsterminal 1 für Bezahlvorgänge in Bereitschaft versetzt. Damit in diesem Modus gewisse Manipulationsmöglichkeiten erkannt werden können, sind die Rechenmittel 7 des Zahlungstransaktionsterminals 1 dazu ausgebildet, das Eingeben von Daten an der Dateneingabeeinrichtung 2, insbesondere das Drücken von Tasten, und/oder das Einstecken von Karten an der Kartenleseeinrichtung 3 zu erfassen, wenn das Zahlungstransaktionsterminal nicht vom Kassensystem 40 in Bereitschaft versetzt wurde und gegebenenfalls eine Meldung an den Serverrechner 14 abzugeben.

Wie erläutert, sind die Zahlungstransaktionsterminals 1 über Datenleitungen 13 und -netze mit zumindest einem Serverrechner 14 verbindbar. Der Serverrechner 14 ist mit einer Datenbank 15 verbunden, in die er die von den Zahlungstransaktionsterminals 1 erhaltenen Betriebsparameter-Werte BP und/oder Meldungen schreibt. Dadurch kann der Serverrechner 14 die in der Datenbank 15 abgelegten Betriebsparameter-Werte nach Abweichungen von einem definierten Zulässigkeitsbereich durchsuchen und bei Erkennen solcher Abweichungen ein Alarmsignal AS generieren. Das Alarmsignal AS kann eine Anzeige einer Meldung an einem Bildschirm sein, oder eine elektronische Meldung, z.B. ein E-Mail an eine verantwortliche Person, etc.. Umgekehrt kann auch das Zahlungstransaktionsterminal 1 der Empfänger eines Alarmsignal vom Serverrechner 14 sein und entsprechend reagieren, z.B. außer Betrieb gehen. Der Serverrechner 14 kann sich bei seinen Analysen auf die erfassten Betriebsparameter-Werte mehrerer oder aller Zahlungstransaktionsterminals stützen und Vergleiche anstellen, Tendenzen ermitteln, Durchschnittswerte bilden etc. und somit genaue Analysen erstellen, die zur Manipulationsbekämpfung dienen.

## Patentansprüche

1. Zahlungstransaktionsterminal (1), umfassend eine Dateneingabeeinrichtung (2) zur Eingabe von Codes, Verkaufsdaten, etc., eine Kartenleseeinrichtung (3) zum Lesen von Daten von Datenspeicherkarten, zumindest eine Datenkommunikationsschnittstelle (8) zur Verbindung mit einem entfernten Serverrechner (14) über eine Datenleitung (13), Rechenmittel (7) zur Steuerung des Zahlungstransaktionsterminals und Stromversorgungsmittel (12) zur Versorgung des Zahlungstransaktionsterminals mit elektrischer Energie, **gekennzeichnet durch** Manipulationsdetektionsmittel (20), die Betriebsparameter (BP) des Zahlungstransaktionsterminals (1) erfassen und an den Serverrechner (14) melden oder Abweichungen der erfassten Betriebsparameter (BP) vom regulären Betrieb des Zahlungstransaktionsterminals (1) detektieren und an den Serverrechner (14) melden.

2. Zahlungstransaktionsterminal nach Anspruch 1, **dadurch gekennzeichnet, dass** die Manipulationsdetektionsmittel (20) einen Temperatursensor (21) umfassen.

3. Zahlungstransaktionsterminal nach Anspruch 2, **dadurch gekennzeichnet, dass** der Temperatursensor (21) ein Infrarotsensor ist.

4. Zahlungstransaktionsterminal nach einem der vorhergehenden Ansprüche, **dadurch gekennzeichnet, dass** die Manipulationsdetektionsmittel (20) zumindest einen Entnahmedetektor (22) zur Erfassung der Entnahme von zumindest einem Teil des Zahlungstransaktionsterminals, wie einer Platine (PCB) und/oder der Kartenleseeinrichtung (3) und/oder der Dateneingabeeinrichtung (2) umfassen.

5. Zahlungstransaktionsterminal nach Anspruch 4, **dadurch gekennzeichnet, dass** der Entnahmedetektor (22) als Schalter (23) ausgebildet ist, der so im Zahlungstransaktionsterminal angeordnet ist, dass die Entfernung des zu überwachenden Teils das Öffnen oder Schließen eines Kontakts (23a) des Schalters (23) auslöst.

6. Zahlungstransaktionsterminal nach Anspruch 4, **dadurch gekennzeichnet, dass** der Entnahmedetektor (22) als Lichtschranke (24) ausgebildet ist, in deren Lichtpfad das zu überwachende Teil angeordnet ist.

7. Zahlungstransaktionsterminal nach einem der vorhergehenden Ansprüche, **dadurch gekennzeichnet, dass** die Manipulationsdetektionsmittel (20) einen Bewegungssensor (25), insbesondere einen Beschleunigungssensor und/oder Neigungssensor, umfassen.

8. Zahlungstransaktionsterminal nach einem der vorhergehenden Ansprüche, **dadurch gekennzeichnet, dass** die Manipulationsdetektionsmittel (20) einen an der Datenkommunikationsschnittstelle anordenbaren Zwischenstecker (26) umfassen, der das Entfernen einer Datenleitung (13) vom Zahlungstransaktionsterminal (1) detektiert.

9. Zahlungstransaktionsterminal nach Anspruch 8, **dadurch gekennzeichnet, dass** der Zwischenstecker (26) einen eindeutigen Identifikationscode (ID) aufweist, der einem bestimmten Zahlungstransaktionsterminal (1) zugeordnet ist, und der Zwischenstecker (26) prüft, ob er an dem zugeordneten Zahlungstransaktionsterminal (1) angeschlossen ist.

10. Zahlungstransaktionsterminal nach einem der vorhergehenden Ansprüche, **dadurch gekennzeichnet, dass** die Manipulationsdetektionsmittel (20) Protokollierungsmittel (30) umfassen, die die Zeitpunkte des Einschaltens und/oder Ausschaltens des Zahlungstransaktionsterminals (1) erfassen.

11. Zahlungstransaktionsterminal nach Anspruch 10, **dadurch gekennzeichnet, dass** die Protokollierungsmittel (30) die Ausschaltzeitpunkte in einem nichtflüchtigen Speicher (31) ablegen, vorzugsweise indem sie in regelmäßigen Zeitabständen einen Zeitstempel (TS) in den nichtflüchtigen Speicher (31) schreiben, wobei der jüngste Zeitstempel als Ausschaltzeitpunkt angesehen wird.

12. Zahlungstransaktionsterminal nach Anspruch 11, **dadurch gekennzeichnet, dass** die Manipulationsdetektionsmittel (20) die Zeitspanne zwischen dem letzten Ausschaltzeitpunkt und dem aktuellen Einschaltzeitpunkt errechnen und, wenn diese Zeitspanne außerhalb eines definierten Zulässigkeitsbereichs liegt, eine Meldung an den Serverrechner (14) abgeben.

13. Zahlungstransaktionsterminal nach einem der vorhergehenden Ansprüche, **dadurch gekennzeichnet, dass** es mit einem Kassensystem (40) verbunden ist, das das Zahlungstransaktionsterminal für Bezahlvorgänge in Bereitschaft versetzt, wobei die Rechenmittel (7) dazu ausgebildet sind, das Eingeben von Daten an der Dateneingabeeinrichtung (2), insbesondere das Drücken von Tasten, und/oder das Einstecken von Karten an der Kartenleseeinrichtung (3) zu erfassen, wenn das Zahlungstransaktionsterminal nicht vom Kassensystem (40) in Bereitschaft versetzt wurde und gegebenenfalls eine Meldung an den Serverrechner (14) abzugeben.

14. Zahlungstransaktionssystem, umfassend Zahlungstransaktionsterminals (1) nach einem der vorhergehenden Ansprüche und zumindest einen Serverrechner (14), der mit den Zahlungstransaktionsterminals über eine Datenleitung (13) verbunden ist.

15. Zahlungstransaktionssystem nach Anspruch 14, **dadurch gekennzeichnet, dass** der Serverrechner (14) mit einer Datenbank (15) verbunden ist, in die er die von den Zahlungstransaktionsterminals (1) erhaltenen Betriebsparameter-Werte (BP) und/oder Meldungen schreibt.

16. Zahlungstransaktionssystem nach Anspruch 15, **dadurch gekennzeichnet, dass** der Serverrechner (14) die in der Datenbank (15) abgelegten Betriebsparameter-Werte (BP) nach Abweichungen der erfassten Betriebsparameter von einem definierten Zulässigkeitsbereich durchsucht und bei Erkennen solcher Abweichungen ein Alarmsignal (AS) generiert.
